(19) **Europäisches Patentamt / European Patent Office / Office européen des brevets**

(11)  **EP 3 882 100 B1**

(12)  **EUROPEAN PATENT SPECIFICATION**

(45) Date of publication and mention of the grant of the patent:
**13.12.2023 Bulletin 2023/50**

(21) Application number: **21164871.2**

(22) Date of filing: **25.03.2021**

(51) International Patent Classification (IPC):
**B60W 60/00** *(2020.01)*    **G01S 13/931** *(2020.01)*
**G01S 13/86** *(2006.01)*    **B60W 30/09** *(2012.01)*
**B60W 30/095** *(2012.01)*    **B60W 50/023** *(2012.01)*
**G01S 7/40** *(2006.01)*

(52) Cooperative Patent Classification (CPC):
**B60W 50/023; B60W 30/09; B60W 30/095; B60W 60/00186; B60W 60/0027;** B60W 2050/0215; B60W 2420/42; B60W 2420/52; B60W 2520/105; B60W 2556/35; B60W 2556/40; B60W 2556/50; G01S 7/40; G01S 13/931

(54) **METHOD FOR OPERATING AN AUTONOMOUS DRIVING VEHICLE**

VERFAHREN ZUM BETREIBEN EINES AUTONOMEN KRATFAHRZEUGS

PROCÉDÉ D'OPÉRATION D'UN VÉHICULE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2020 US 202016844562**

(43) Date of publication of application:
**22.09.2021 Bulletin 2021/38**

(73) Proprietor: **Baidu USA LLC**
**Sunnyvale, California 94089 (US)**

(72) Inventors:
• **LIU, Xiaodong**
**Sunnyvale, California 94089 (US)**
• **QU, Ning**
**Sunnyvale, California 94089 (US)**

(74) Representative: **Studio Torta S.p.A.**
**Via Viotti, 9**
**10121 Torino (IT)**

(56) References cited:
WO-A1-2020/020526    JP-A- 2017 132 285
US-A1- 2019 049 958    US-A1- 2019 050 692

**Description**

TECHNICAL FIELD

The present invention relates to a method for operating an autonomous driving vehicle.

BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

As autonomous driving systems have become more prevalent, it is expected that geofenced applications of autonomous driving vehicles (ADVs), i.e. Robotaxi in a large scale, may emerge in the next three to five years.

However, key challenges remain to be addressed before ADV can be safely deployed. Among the key challenges are to: (1) determine in real-time the capability boundary with associated risk of a safety redundancy autonomous system in a defined operational design domain (ODD); (2) monitor autonomous vehicle operating within its capability boundary with a predefined tolerable risk in real-time; and (3) endow safety redundancy autonomous system real-time minimum risk condition (MRC) decision capability and corresponding safety mechanism for internal transition. It is noted that the key challenges are interdependent to ensure overall autonomous vehicle safety. The present disclosure is directed to the monitoring of safety redundancy autonomous driving system (ADS) operating within its capability boundary in real-time.

Current industrial approaches for Level 4 autonomous vehicle focus on improving performance with redundant and diversified sensors, hardware and algorithms, but very little has been reported about ADS capability boundary and risk distribution within sensor coverage for real-time monitor.

Level 4 vehicles are "designed to perform all safety-critical driving functions and monitor roadway conditions for an entire trip." However, it is important to note that this is limited to the "operational design domain (ODD)" of the vehicle-meaning it does not cover driving scenario which is outside of ODD and risk exposure when level 4 vehicles operating within ODD is well defined and tolerable.

US 2019050692A1 discloses various systems and methods for implementing context-based digital signal processing are described herein. An object detection system includes a processor to: access sensor data from a first sensor and a second sensor integrated in a vehicle; access an operating context of the vehicle; assign a first weight to a first object detection result from sensor data of the first sensor, the first weight adjusted based on the operating context; assign a second weight to a second object detection result from sensor data of the second sensor, the second weight adjusted based on the operating context; and perform a combined object detection technique by combining the first object detection result weighted by the first weight and the second object detection result weighted by the second weight.

US 2019049958A1 discloses a system which can diagnose sensor issues for a vehicle that can perform automatic driving functions based on areas where sensors overlap coverage and sensor performance limitation (SOTIF (Safety Of The Intended Functionality) in ISO 26262). First, the system can identify sensor overlap zones for advanced driver assistance systems/automated driving (ADAS/AD) applications that can be used for multiple sensor correlation and diagnostics. Once the zones have been identified, the system can define detailed multiple sensor correlation and diagnostics (e.g., the same kind of sensor, different kind of sensors, two-way plausible check, three-way voting, etc.). Finally, verified sensor output may be used in monitoring sensor fusion/deep neural network (DNN) outputs within defined a monitor zone.

SUMMARY

In a first aspect of the invention, a computer-implemented method comprising the features of claim 1 is provided.

In a second aspect of the invention, a non-transitory machine-readable medium comprising the features of claim 9 is provided.

In a third aspect of the invention, a data processing system comprising the features of claim 10 is provided.

In a fourth aspect of the invention, a computer program comprising the features of claim 11 is provided.

With the present invention, the trajectory of the ADV may be planned better, and various risks may be avoided.

BRIEF DESCRIPTION OF THE DRAWINGS

Embodiments of the invention are illustrated by way of example and not limitation in the figures of the accompanying drawings in which like references indicate similar elements.

Figure 1 is a block diagram illustrating a networked system according to one embodiment.
Figure 2 is a block diagram illustrating an example of an autonomous vehicle according to one embodiment.
Figures 3A-3B are block diagrams illustrating an example of a perception and planning system used with an autonomous vehicle according to one embodiment.

Figure 4 is a block diagram illustrating an example of a safety redundancy monitoring module used with an autonomous vehicle according to one embodiment.

Figure 5 is a block diagram illustrating an example of an autonomous driving system (ADS) capability boundary and risk contributors according to one embodiment of the invention.

Figure 6 is a block diagram illustrating an example of a safety redundancy autonomous driving system (ADS) according to one embodiment of the invention.

Figure 7 is a schematic illustrating an example of a sensor layout of an autonomous driving vehicle according to one embodiment.

Figure 8A is a schematic illustrating an example of a sensor coverage with a nominal risk distribution of the sensor layout of an autonomous driving system shown in Figure 7 according to one embodiment.

Figure 8B is a schematic illustrating an example of sensor coverage boundary surrounding an ADV according to an embodiment.

Figure 8C is a schematic illustrating an example of a sensor coverage with an adjusted risk distribution of the sensor layout of an autonomous driving system shown in Figure 7 according to one embodiment.

Figure 9 is a block diagram illustrating an example of a sensor system monitoring function according to one embodiment.

Figure 10 is a flow diagram illustrating a process of operating an autonomous driving vehicle according to one embodiment of the invention.

Figure 11 is a flow diagram of monitoring safety redundancy autonomous driving system (ADS) operating within its defined risk tolerable boundary in real-time according to one embodiment of the invention.

## DETAILED DESCRIPTION

Various embodiments and aspects of the invention will be described with reference to details discussed below, and the accompanying drawings will illustrate the various embodiments. The following description and drawings are illustrative and are not to be construed as limiting the invention. Numerous specific details are described to provide a thorough understanding of various embodiments of the present invention. However, in certain instances, well-known or conventional details are not described in order to provide a concise discussion of embodiments of the present invention.

Reference in the specification to "one embodiment" or "an embodiment" means that a particular feature, structure, or characteristic described in conjunction with the embodiment can be included in at least one embodiment of the invention.

According to the invention, a computer-implemented method for monitoring a safety redundancy autonomous driving system operating within its predefined risk tolerable boundary in real-time is disclosed. A zone failure risk score for each of predetermined zones is calculated based on a sensor failure risk score. The sensor failure risk score is associated with each of the sensors mounted on the autonomous driving vehicle (ADV). The predetermined zones are defined based on a sensor layout of the sensors. A sensor capability coverage of the ADV is then determined based on the zone failure risk score associated with each of the zones. A drivable area of the ADV is determined based on the sensor capability coverage in view of map data associated with a current location of the ADV. Thereafter, a trajectory is planned based on the drivable area to autonomously drive the ADV to navigate a driving environment surrounding the ADV. In one embodiment, an obstacle is detected based on sensor data obtained from at least a portion of the sensors. Then, the drivable area is adjusted based on a position of the obstacle relative to the current location of the ADV. In one embodiment, adjusting the drivable area based on a position of the obstacle includes detecting that the obstacle is located within the drivable area. Adjusting the drivable area based on a position of the obstacle also includes determining a maximum deceleration rate of the ADV. Further, adjusting the drivable area based on a position of the obstacle includes refining the drivable area based on the maximum deceleration rate in view of an obstacle detected within the drivable area to avoid colliding with the obstacle.

In one embodiment, it is detected that the obstacle is located within the drivable area. Then, a moving trajectory of the obstacle is predicted. Thereafter, the drivable area of the ADV is refined based on the predicted moving trajectory of the obstacle. In one embodiment, the moving trajectory of the obstacle is predicted in response to detecting that the obstacle is located outside of the drivable area. According to the invention, the zone failure risk score of each of the predetermined zones is calculated based on a mean time between failure (MTBF) for each of the sensors associated with the corresponding zone. In one embodiment, it is determined that a first zone failure risk score of a first zone of the predetermined zones exceeds a first predetermined risk threshold. Then, the sensor capability coverage of the ADV is modified in response to determining that the first zone failure risk score exceeds the first predetermined risk threshold. In one embodiment, it is determined that a first sensor fails to function properly. Thereafter, the sensor capability coverage of the ADV is modified based on a sensor coverage of the failed first sensor.

In another aspect of the disclosure, embodiments of the present invention also provide a non-transitory machine-readable medium and a data processing system perform the processes as described above.

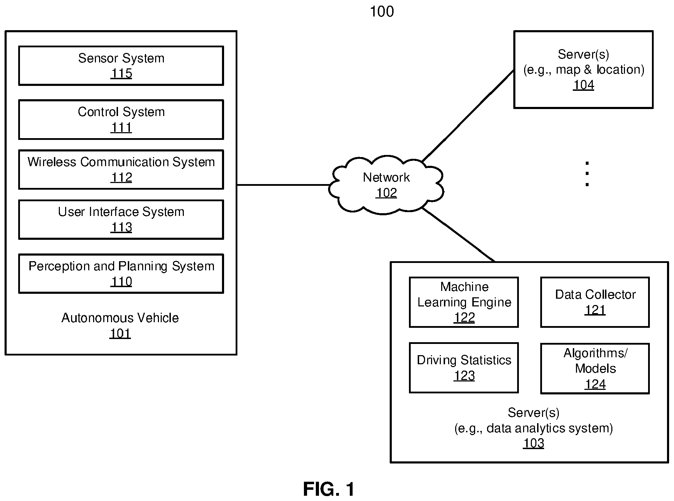

Figure 1 is a block diagram illustrating an autonomous vehicle network configuration according to one embodiment of the invention. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode.

In one embodiment, autonomous vehicle 101 includes, but is not limited to, perception and planning system 110, vehicle control system 111, wireless communication system 112, user interface system 113, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

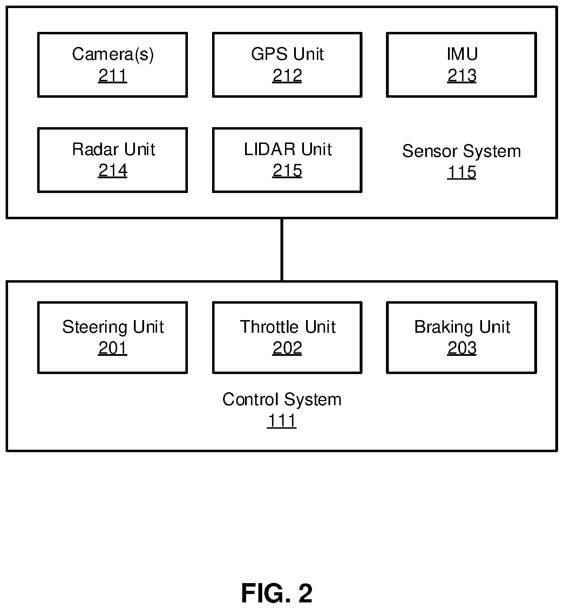

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the autonomous vehicle. IMU unit 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn controls the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110. While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either autonomous vehicles or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc. Based on driving statistics 123, machine learning engine 122 generates or trains a set of rules, algorithms, and/or predictive models 124 for a variety of purposes. In one embodiment, algorithms 124 may include an algorithm to determine MTBF for each of the sensors and an algorithm to determine risk distribution of sensors, etc. Algorithms 124 can then be uploaded on ADVs to be utilized during autonomous driving in real-time.

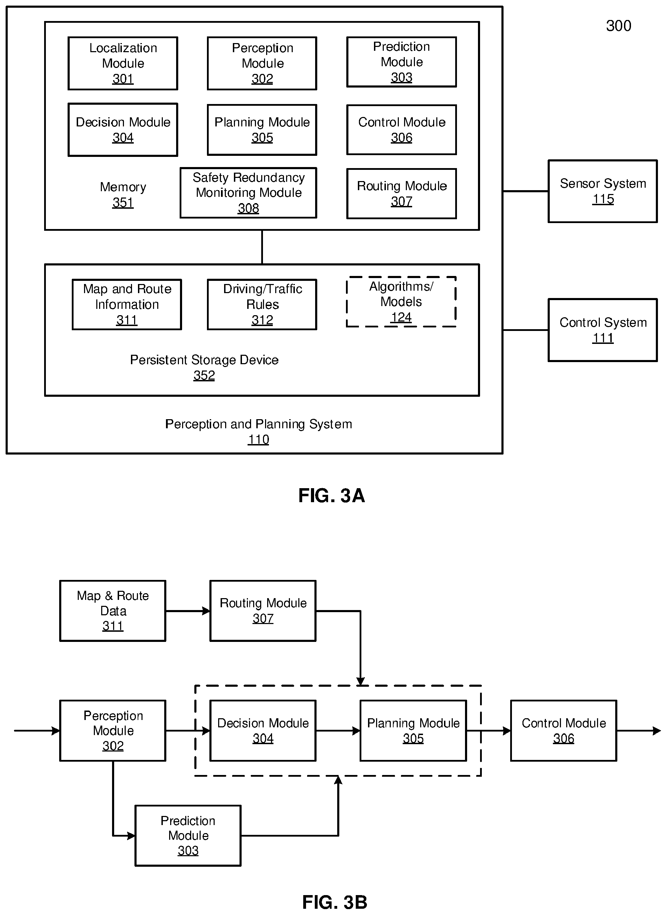

Figures 3A and 3B are block diagrams illustrating an example of a perception and planning system used with an autonomous vehicle according to one embodiment. System 300 may be implemented as a part of autonomous vehicle 101 of Figure 1 including, but is not limited to, perception and planning system 110, control system 111, and sensor system 115. Referring to Figures 3A-3B, perception and planning system 110 includes, but is not limited to, localization module 301, perception module 302, prediction module 303, decision module 304, planning module 305, control module 306, routing module 307, safety redundancy monitoring module 308.

Some or all of modules 301-308 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-308 may be integrated together as an integrated module.

Localization module 301 determines a current location of autonomous vehicle 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time. Based on a decision for each of the objects perceived, planning module 305 plans a path or route for the autonomous vehicle, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the autonomous vehicle. For example, the navigation system may determine a series of speeds and directional headings to affect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

In one embodiment, safety redundancy monitoring module 308 (also simply referred to as a safety monitoring module) is configured to determine a drivable area of an ADV based on a sensor capability coverage in view of map data associated with a current location of the ADV with a primary ADS and a secondary ADS. Sensor system capability based on sensor dynamic coverage and associated risk distribution can be adjusted in real-time to delineate a safe perception boundary of an ADS for any predefined tolerable risk. As a result, sensor performance limitation induced risk due to ODD environmental change can be reduced. The primary ADS is responsible for a performance oriented point-to-point route operation of the ADV and the secondary ADS focuses on a system fail operation to meet minimum risk condition (MRC) in case the primary ADS is completely unavailable. Note that module 308 may be integrated with another module, such as, for example, planning module 305 and/or control module 306. The output of safety redundancy monitoring module 308 can be used by planning module 305 to plan a trajectory based on the drivable area to autonomously drive the ADV to navigate a driving environment surrounding the ADV.

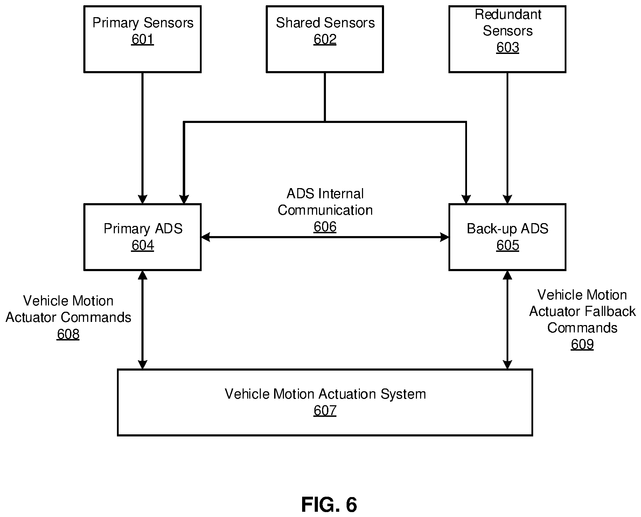

Modules 301-308 may be collectively referred to as an ADS. An ADV may be equipped with at least two ADS systems: 1) a primary ADS and 2) a secondary or backup ADS, as shown in Figure 6. Each of the primary ADS and the secondary ADS may include at least some of the modules 301-308. The primary ADS and the secondary ADS may communicate with each other over a local area network or link.

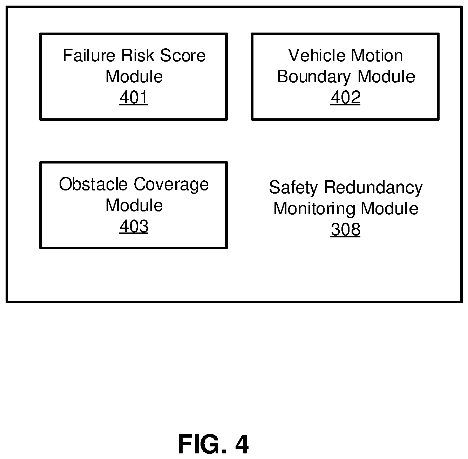

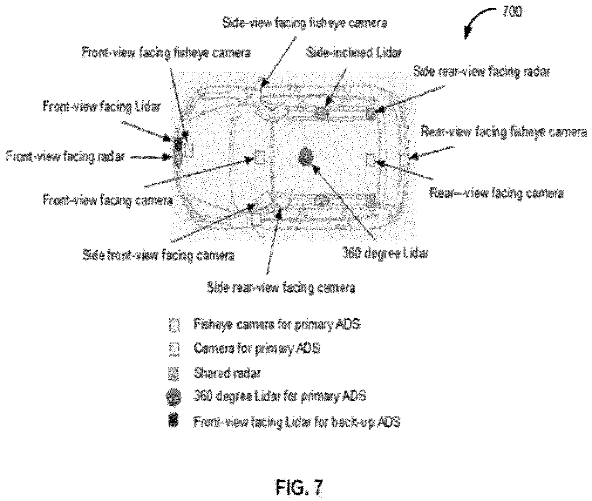

Figure 4 is a block diagram illustrating an example of a safety redundancy monitoring module 308 according to one embodiment. Referring to Figure 4, in one embodiment, safety redundancy monitoring module 308 includes, amongst others, failure risk score module 401 and vehicle motion boundary module 402. In one embodiment, failure risk score module 401 is configured to calculate a zone failure risk score for each of the predetermined zones based on a sensor failure risk score associated with each of the sensors mounted on the ADV. The predetermined zones are defined based on a sensor layout 700 of the sensors as shown in Figure 7.

In one embodiment, vehicle motion boundary module 402 is configured to determine a sensor capability coverage of the ADV based on the zone failure risk score associated with each of the zones. Vehicle motion boundary module 402 is further configured to determine a drivable area of the ADV based on the sensor capability coverage in view of map data associated with a current location of the ADV.

In one embodiment, an obstacle is detected based on sensor data obtained from at least a portion of the sensors. The obstacle can be detected using a fusion algorithm and tracked with object tracking provided by sensor fusion module. The obstacle detectability of an individual sensor with its algorithm within a given ODD is used as statistical data that derive a mean time between failure (MTBF) associated with the individual sensor. Failure in MTBF refers to either false positive (ghost obstacle) or false negative (missing obstacle) which differentiates from its physical failure. Thereafter, vehicle motion boundary module 402 is configured to adjust the drivable area based on a position of the obstacle relative to the current location of the ADV.

In one embodiment, the adjustment of the drivable area based on a position of the obstacle includes detecting that the obstacle is located within the drivable area; determining a maximum deceleration rate of the ADV; and refining the drivable area based on the maximum deceleration rate in view of an obstacle detected within the drivable area to avoid colliding with the obstacle.

In one embodiment, obstacle coverage module 403 is configured to detect that the obstacle is located within the drivable area. A moving trajectory of the obstacle is then predicted. Vehicle motion boundary module 402 is configured to refine the drivable area of the ADV based on the predicted moving trajectory of the obstacle.

In one embodiment, the moving trajectory of the obstacle is predicted in response to detecting that the obstacle is located outside of the drivable area. In one embodiment, a portion of the obstacle is located within the drivable area. According to the invention, the zone failure risk score of each zone is calculated based on a mean time between failure (MTBF) for each of the sensors associated with the corresponding zone.

In one embodiment, it is determined that a first zone failure risk score of a first zone of the zones exceeds a first predetermined risk threshold. Thereafter, the sensor capability coverage of the ADV is modified in response to determining that the first zone failure risk score exceeds the first predetermined risk threshold. In one embodiment, it is determined that a first sensor fails to function properly. The sensor capability coverage of the ADV is modified based on a sensor coverage of the failed first sensor.

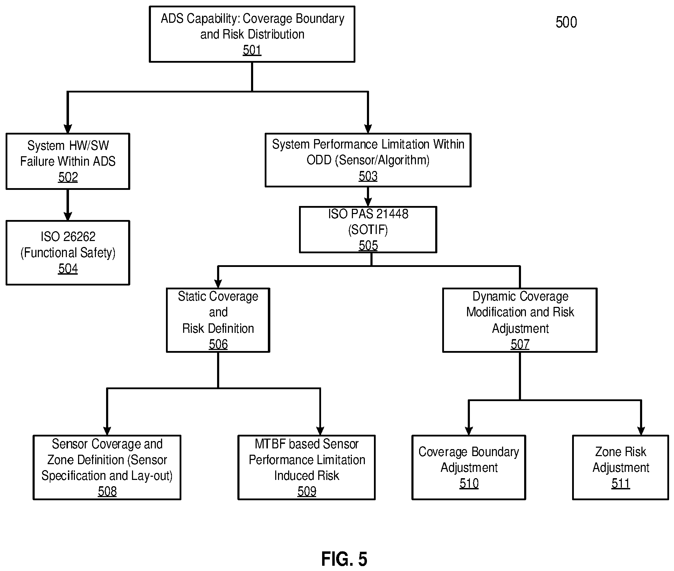

Figure 5 is a block diagram illustrating an example of an autonomous driving system (ADS) capability boundary and risk contributors 500 according to one embodiment of the invention. Referring to Figure 5, the key risk contributors affecting ADS sensor system capability include dynamical coverage and adjustable risk distribution. As further illustrated in Figure 5, ADS capability 501 is mainly contributed from (1) system hardware/software (HW)/(SW) failure 502 and (2) system performance limitation within ODD 503. System hardware/software (HW)/(SW) failure 502 can be adequately addressed with ISO 26262 - Functional safety 504.

In one embodiment, system performance limitation within ODD 503 is addressed with ISO PAS 21448 safety of the intended functionality (SOTIF) 505. ISO PAS 21448 safety of the intended functionality (SOTIF) 505 refers to the absence of unreasonable risk due to hazards resulting from functional insufficiencies of the intended functionality or by reasonably foreseeable misuse by persons. ISO PAS 21448 safety of the intended functionality (SOTIF) 505 provides guidance on the design, verification, and validation measures that can be applied in order to achieve the SOTIF in autonomous mobility products.

In one embodiment, ISO PAS 21448 safety of the intended functionality (SOTIF) 505 is divided into static coverage and risk definition 506, and dynamic coverage modification and risk adjustment 507. In one embodiment, static coverage and risk definition 506 is divided into sensor coverage and zone definition 508 and MTBF based sensor performance limitation induced risk 509. In one embodiment, dynamic coverage modification and risk adjustment 507 is divided into coverage boundary adjustment 510 and zone risk adjustment 511.

Figure 6 is a block diagram illustrating an example of a safety redundancy autonomous driving system (ADS) according to one embodiment of the invention. Referring to Figure 6, a safety redundancy autonomous driving system balances the capability of the performance oriented primary ADS and the safety focused secondary ADS. The ADV primary sensors 601 are in communication with and dedicated to the primary ADS 604. The ADV redundant sensors 603 are in communication with and dedicated to the secondary ADS 605. Both the primary ADS 604 and the secondary ADS 605 systems are in communication with and share the shared sensors 602. The primary ADS 604 and the secondary ADS 605 systems are in communication with ADS 602 via an internal communication link 606.

In one embodiment, the primary ADS 604 and the secondary ADS 605 systems are in communication with the vehicle motion actuation system 607 via vehicle motion actuator commands 608 and vehicle motion actuator fallback commands 609.

Figure 7 is a schematic illustrating an example of a sensor layout of an autonomous driving vehicle according to one embodiment. Referring to Figure 7, an example of a sensor layout 700 is used for the purpose of demonstrating how the system's nominal capability boundary and associated risk can be initially determined. From the sensor system specification and the sensor layout 700 in the ADV, the nominal sensor coverage with redundancy and diversification can be determined for a safety redundancy autonomous driving system. Furthermore, the associated risk within sensor coverage can be estimated from statistical data including a Mean Time Between Failure (MTBF) for each sensor and a corresponding position in the sensor layout. In one embodiment, the MTBF represents how often each sensor indicates a false positive or a false negative occurrence.

In one embodiment, the sensors include a set of primary sensors providing sensor data to a primary ADS, a set of redundant sensors providing sensor data to a back-up ADS, and a set of shared sensors shared by the primary ADS and the back-up ADS. In one embodiment, the sensors include one or more of a camera, a LIDAR device, or a radar device. In this example as shown in Figure 7, a primary set of sensors includes front-view facing cameras, side-view facing cameras, a rear-view facing fisheye camera, and a 360-degree LIDAR. A secondary sensor includes a front-view facing LIDAR. A set of shared sensors includes side-inclined LIDARs, side rear-view facing radars, rear-view facing camera, and a front-view facing radar. Note that the types of the sensors may impact the overall failure risk of the corresponding zone or the entire vehicle.

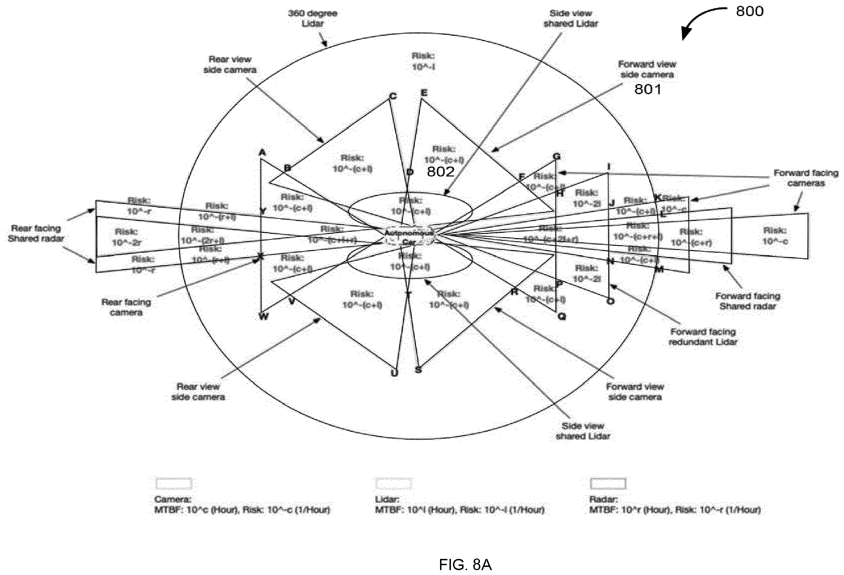

Figure 8A is a schematic illustrates an example of a sensor coverage with a nominal risk distribution 800 of the sensor layout of an autonomous driving system shown in Figure 7 according to one embodiment. Referring to Figure 8A, redundant and diversified sensors, such as radar, LIDAR and camera, are mapped in predetermined zones to define sensor system coverage. In one embodiment, the predetermined zones are defined based on a sensor layout of the sensors as exemplified in Figure 7. A zone failure risk score is calculated for each of predetermined zones based on a sensor failure risk score associated with each of sensors mounted on the ADV. In one embodiment, the zone failure risk is derived based on the ODD related sensor performance indicator, MTBF.

In one embodiment, the risk Y (accident/hour) associated with sensor performance limitation may be determined based on the following formula:

$$Y = \frac{1}{X}$$

where X is sensor's MTBF. Higher MTBF results in lower sensor performance limitation induced risk. For example, the MTBF of a camera is given by $10^C$ (hour) and the associated risk of a camera is given by $10^{-C}$ (1/hour).

Similarly, the MTBF of a LiDAR is given by $10^L$ (hour) and the associated risk of a camera is given by $10^{-L}$ (1/hour). The MTBF of a radar is given by $10^R$ (hour) and the associated risk of a camera is given by $10^{-R}$ (1/hour).

In one embodiment, a dynamical part of MTBF can be adjusted in real-time. Thus, defined sensor coverage and risk distribution can be used to delineate perception boundary based on the performance or operating status of the sensors. A sensor may fail to function properly or fail to detect or recognize an obstacle, which in turn affects the corresponding sensor coverage of one or more zones. The significance of the defined sensor system capability is to reduce risk due to false positive and false negative by sensor system. Referring to Figure 8A, the acceptable risk can be defined as anything less than or equal to $10^{-(C+L)}$ (1/Hour) within sensor coverage where C and L represent camera and LiDAR performance indicator, respectively.

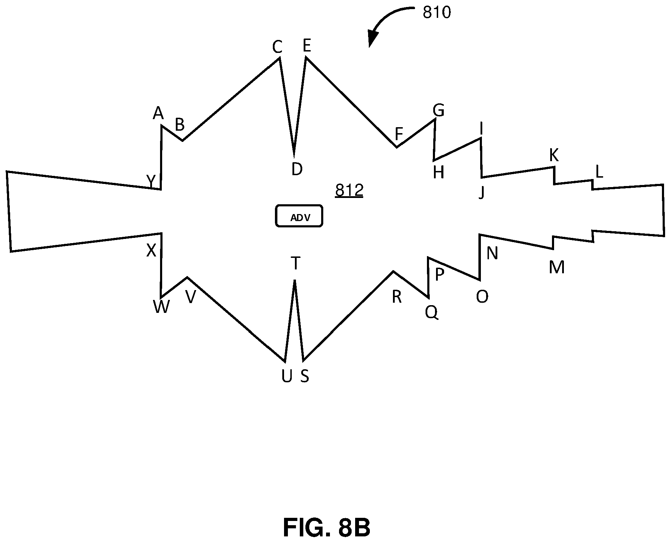

Figure 8B illustrates an example of sensor capability coverage surrounding an ADV according to an embodiment. Referring to Figure 8B, a parameter 810 defined by A, B, C ... X, and Y surrounding an ADV 812 defines a risk sensor capability coverage. The sensor capability coverage of the ADV is determined based on a zone failure risk score associated with each of the zones. The zone failure risk score for each of predetermined zones is calculated based on a sensor failure risk score associated with each of the sensors mounted on the ADV. The predetermined zones are defined based on a sensor layout of the sensors. Accordingly, obstacle detection can be obtained and safe drivable area can be determined using the defined risk sensor coverage boundary.

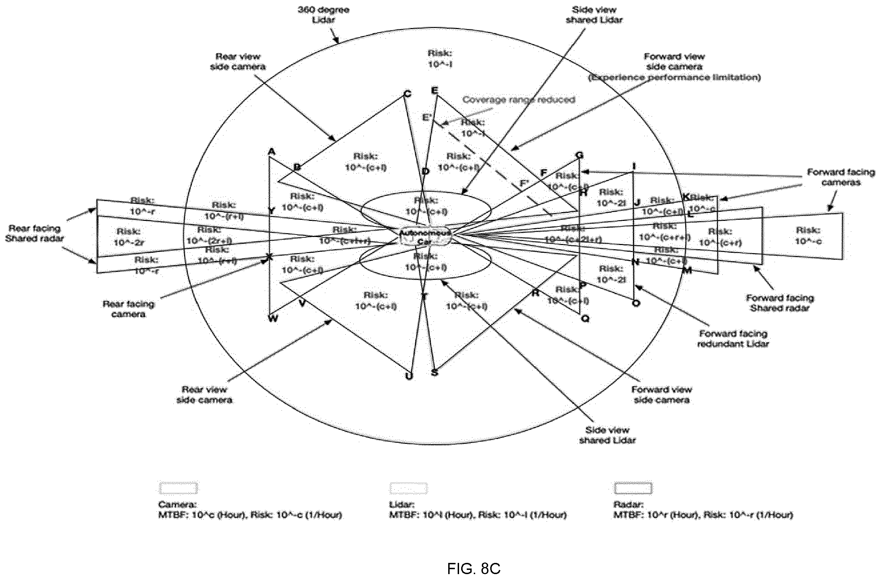

Referring back to Figure 8A, in one embodiment, a zone failure risk score 802 for the predetermined zone based on a sensor failure risk score associated with a forward view side camera mounted on the ADV is represented by a nominal risk of $10^{-(C+L)}$ (1/Hour). Figure 8C illustrates an example of a sensor coverage with an adjusted risk distribution of the sensor layout of an autonomous driving of an autonomous driving vehicle shown in Figure 7 according to one embodiment. Referring to Figure 8C, one of the forward view side cameras 801 mounted on an ADV is subjected to performance limitation during the ADV operation, thus, the associated sensor capability coverage 803 is reduced. Note the sensor capability coverage is adjusted as indicated, i.e. E $\rightarrow$ E' and F $\rightarrow$ F'. The drivable area of the ADV is then determined based on the sensor capability coverage in view of map data associated with a current location of the ADV. Thereafter, a trajectory is planned based on the drivable area to autonomously drive the ADV to navigate a driving environment surrounding the ADV.

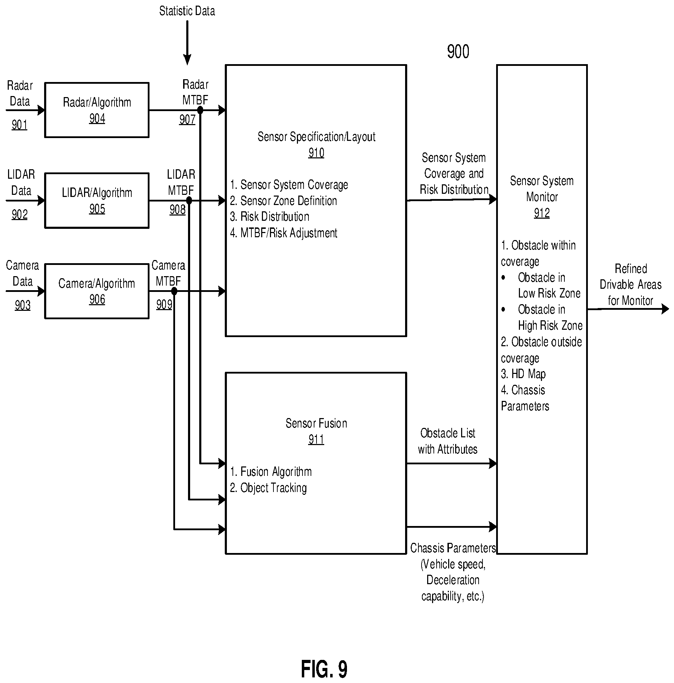

Figure 9 is a block diagram illustrating an example of a sensor system monitoring function according to one embodiment. Referring to Figure 9, sensor data are used with sensor algorithm to determine MTBF for each of the sensors. Sensor data include radar data 901, LIDAR data 902, and camera data 903. For example, radar data 901 are used with radar algorithm 904 to determine radar MTBF 907. Similarly, LIDAR data 902 are used with LIDAR algorithm 905 to determine LIDAR MTBF 908. Camera data 903 are used with camera algorithm 906 to determine camera MTBF 909. MTBF are statistical values for the respective sensor/algorithm performance. In one embodiment, MTBF may be determined by vehicle simulation having a specific sensor layout such as testing how often a sensor reports a false positive or false negative of object detection. MTBF for each sensor are used with the sensor specification and sensor layout of the sensor 910. In one embodiment, sensor specification and sensor layout of the sensor 910 can be used to determine sensor zones. Sensor specification and sensor layout of the sensor 910 can be used to calculate a zone failure risk score for each of the predetermined sensor zones based on a sensor failure risk score associated with each of the sensors mounted on the ADV. In one embodiment, sensor specification and sensor layout of the sensor 910 is used to determine a sensor capability coverage of the ADV based on the zone failure risk score associated with each of the determined sensor zones. The output of block 910 provides sensor system coverage and risk distribution.

Still referring to Figure 9, in one embodiment, radar MTBF 907, LIDAR MTBF 908, and camera MTBF 909, for example, are used with sensor fusion 911 to detect an obstacle. The obstacle can be detected using fusion algorithm and object tracking provided by sensor fusion module. Sensor fusion 911 provides a location of a static object. In another embodiment, sensor fusion 911 provides a location, a speed, and a heading of a dynamic object. In one embodiment, sensor fusion 911 may be integrated as a part of or communicatively coupled to perception module 302. As described above, perception module 302 may detect and recognize an obstacle based on sensor data obtained from the sensors. A sensor may be detected as failure to operate properly based on the corresponding sensor data obtained from the sensor. For example, there is a known static obstacle (e.g., ground truth) at a particular location and the sensor fails to detect or recognize it. Perception module 302 may determine that that particular sensor fails to operate. As a result, the sensor may be removed from the sensor layout as shown in Figure 7, and the risk distribution as shown in Figure 8C may be affected, for example, dynamically.

In one embodiment, sensor system monitor block 912 refines the drivable area of the ADV based on the predicted moving trajectory of the obstacle. It is detected that the obstacle is located within the drivable area. Thereafter, a moving trajectory of the obstacle is predicted. In one embodiment, the detected obstacle within the sensor capability coverage can include obstacle in low risk zone and obstacle in high risk zone. In another embodiment, the detected obstacle can be outside the sensor capability coverage.

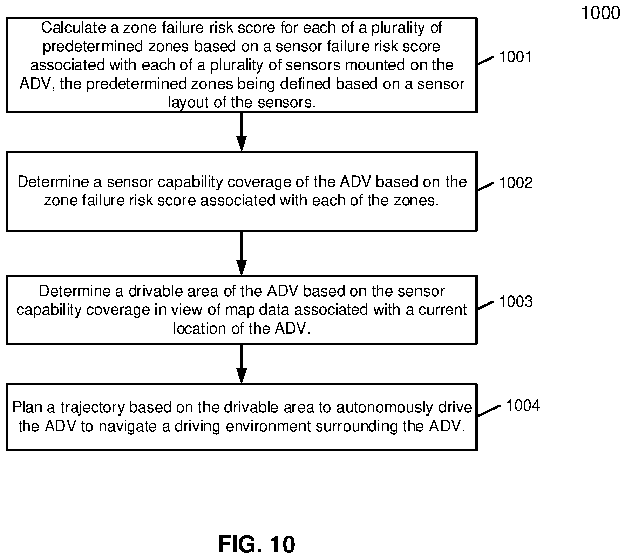

Figure 10 is a flow diagram illustrating a process of operating an autonomous driving vehicle according to one embodiment of the invention. Process 1000 may be performed by processing logic which may include software, hardware, or a combination thereof. For example, process 1000 may be performed by safety redundancy monitoring module 308 of Figures 3A and 4.

Referring to Figure 10, in operation 1001, processing logic calculates a zone failure risk score for each of predetermined zones based on a sensor failure risk score associated with each of sensors mounted on the ADV. The predetermined zones are defined based on a sensor layout of the sensors. In operation 1002, processing logic then determines a sensor capability coverage of the ADV based on the zone failure risk score associated with each of the predetermined zones. In operation 1003, processing logic determines a drivable area of the ADV based on the sensor capability coverage in view of map data associated with a current location of the ADV. Thereafter, in operation 1004, processing logic plans a trajectory based on the drivable area to autonomously drive the ADV to navigate a driving environment surrounding the ADV.

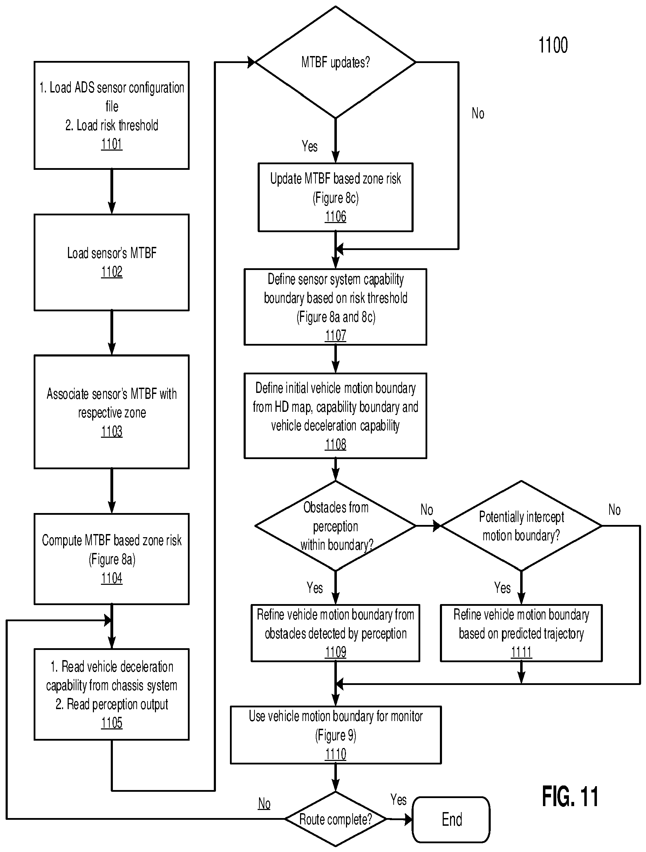

Figure 11 is a flow diagram of monitoring safety redundancy autonomous driving system (ADS) operating within its defined risk tolerable boundary in real-time according to one embodiment of the invention. Process 1100 may be performed by processing logic which may include software, hardware, or a combination thereof. For example, process 1100 may be performed by safety redundancy module 308 of Figures 3A and 4.

Referring to Figure 11, in operation 1101, processing logic loads ADS sensor configuration file and predetermined risk threshold. ADS sensor configuration file is based on the sensor layout and sensor specification. In one embodiment, the risk threshold is a fixed value and can be obtained based on statistical data of human driving experience. It is determined that a first zone failure risk score of a first zone of the predetermined zones exceeds a first predetermined risk threshold. The sensor capability coverage of the ADV is modified in response to determining that the first zone failure risk score exceeds the first predetermined risk threshold.

In operation 1102, processing logic loads MTBF associated with each sensor mounted on the ADV. In operation 1103, processing logic associates MTBF associated with each sensor with the corresponding zone. In operation 1104, the zone failure risk score of each of the predetermined zones is calculated based on the MTBF for each of the sensors associated with the corresponding zone. Now referring to Figure 8A, a sensor coverage with a nominal risk distribution 800 of the sensor layout of an autonomous driving of an autonomous driving vehicle is shown. Redundant and diversified sensors, such as radar, LIDAR and camera, are mapped in predetermined zones within sensor system coverage. In one embodiment, the predetermined zones are defined based on a sensor layout of the sensors as exemplified in Figure 7. A zone failure risk score is calculated for each of predetermined zones based on a sensor failure risk score associated with each of sensors mounted on the ADV.

In operation 1105, processing logic reads vehicle deceleration capability from chassis system and perception output. If it is determined that the MTBF is updated, processing logic updates the zone failure risk score of each of the predetermined zones in operation 1106. Figure 8C illustrates an example of a sensor capability coverage with an updated zone failure risk score according to one embodiment. Referring to Figure 8C, one of the forward view side cameras 801 mounted on an ADV is subjected to performance limitation during the ADV operation, thus, the associated sensor capability coverage 803 is reduced. Note the sensor capability coverage is adjusted as indicated, i.e. E → E' and F → F'.

In operation 1107, processing logic determines a sensor capability coverage of the ADV based on the predetermined risk threshold. In one embodiment, processing logic can determine that a first zone failure risk score of a first zone of the predetermined zones exceeds a first predetermined risk threshold. Processing logic, then modifies the sensor capability coverage of the ADV in response to determining that the first zone failure risk score exceeds the first predetermined risk threshold.

In operation 1108, processing logic determines an initial vehicle motion boundary based on map data such as HD map, capability boundary, and vehicle deceleration capability. Accordingly, an initial vehicle motion boundary of the ADV based on the sensor capability coverage in view of map data associated with a current location of the ADV is determined. In one embodiment, an initial vehicle motion boundary defines a drivable area of the ADV.

The processing logic determines if detected obstacles based on the perception module output are within the initial vehicle motion boundary. If it is determined that the detected obstacles are within the initial vehicle motion boundary, processing logic refines vehicle motion boundary from obstacles detected by perception module in operation 1109. Then, in operation 1110, processing logic uses the refined vehicle motion boundary for monitor. In one embodiment, processing logic plans a trajectory based on the drivable area to autonomously drive the ADV to navigate a driving environment surrounding the ADV. It is then determined if the route of the ADV is complete. If the route the ADV travels is complete, the process 1100 ends. If the route is not complete, the process 1100 continues to operation 1105.

In one embodiment, processing logic determines if the detected obstacle is located within the drivable area. If it is determined that the detected obstacles are outside the initial vehicle motion boundary, processing logic determines if the obstacles potentially intercept the motion boundary. In one embodiment, processing logic predicts a moving trajectory of the obstacle. If it is determined that the obstacles potentially intercept the motion boundary, the processing logic refines the vehicle motion boundary or the drivable area of the ADV based on the predicted moving trajectory of the obstacle in operation 1111. If it is determined that the obstacles do not potentially intercept the motion boundary, the processing logic proceeds to operation 1110 in which processing logic uses the refined vehicle motion boundary for monitor. In one embodiment, the moving trajectory of the obstacle is predicted in response to detecting that the obstacle is located outside of the drivable area. In one embodiment, a portion of the obstacle is located within the drivable area.

If it is determined that the obstacles do not potentially intercept the motion boundary, processing logic executes operation 1110 to use vehicle motion boundary for monitor. Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices. Embodiments of the invention also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. It will be evident that various modifications may be made thereto without departing from the scope of the invention as set forth in the following claims. The embodiments and drawings are, accordingly, to be regarded in an illustrative sense rather than a restrictive sense.

## Claims

1. A computer-implemented method for operating an autonomous driving vehicle (ADV), the method comprising:

   calculating (1001) a zone failure risk score for each of a plurality of predetermined zones based on a sensor failure risk score associated with each of a plurality of sensors mounted on the ADV, the plurality of predetermined zones being defined based on a sensor layout of the sensors, wherein the zone failure risk score of each of the plurality of predetermined zones is calculated based on a mean time between failure (MTBF) for each of the plurality of sensors associated with the corresponding zone;
   determining (1002) a sensor capability coverage of the ADV based on the zone failure risk score associated with each of the plurality of predetermined zones;
   determining (1003) a drivable area of the ADV based on the sensor capability coverage in view of map data associated with a current location of the ADV; and

planning (1004) a trajectory based on the drivable area to autonomously drive the ADV to navigate a driving environment surrounding the ADV.

2. The method of claim 1, further comprising:

detecting an obstacle based on sensor data obtained from at least a portion of the sensors; and adjusting the drivable area based on a position of the obstacle relative to the current location of the ADV.

3. The method of claim 2, wherein adjusting the drivable area based on a position of the obstacle comprises:

detecting that the obstacle is located within the drivable area;
determining a maximum deceleration rate of the ADV; and
refining the drivable area based on the maximum deceleration rate in view of an obstacle detected within the drivable area to avoid colliding with the obstacle.

4. The method of claim 2, further comprising:

detecting that the obstacle is located within the drivable area;
predicting a moving trajectory of the obstacle; and
refining the drivable area of the ADV based on the predicted moving trajectory of the obstacle.

5. The method of claim 4, wherein the moving trajectory of the obstacle is predicted in response to detecting that the obstacle is located outside of the drivable area.

6. The method of claim 4, wherein a portion of the obstacle is located within the drivable area.

7. The method of any of claims 1-6, further comprising:

determining that a first zone failure risk score of a first zone of the plurality of predetermined zones exceed a first predetermined risk threshold; and modifying the sensor capability coverage of the ADV in response to determining that the first zone failure risk score exceeds the first predetermined risk threshold.

8. The method of any of claims 1-7, further comprising:

determining that a first sensor fails to function properly; and
modifying the sensor capability coverage of the ADV based on a sensor coverage of the failed first sensor.

9. A non-transitory machine-readable medium having instructions stored therein, which when executed by a processor, cause the processor to perform the method according to any of claims 1-8.

10. A data processing system, comprising:

a processor; and
a memory coupled to the processor to store instructions, which when executed by the processor, cause the processor to perform the method according to any of claims 1-8.

11. A computer program having instructions that, when executed by a processor, cause the processor to implement the method according to any of claims 1-8.

**Patentansprüche**

1. Computerimplementiertes Verfahren zum Betreiben eines autonom fahrenden Fahrzeugs (ADV), wobei das Verfahren umfasst:

Berechnen (1001) eines Zonenausfall-Risiko-Scores für jede einer Vielzahl von vorbestimmten Zonen auf Basis eines Sensorausfall-Risiko-Scores, der jedem einer Vielzahl von am ADV angebrachten Sensoren zugeordnet ist, wobei die Vielzahl von vorbestimmten Zonen auf Basis eines Sensor-Layouts der Sensoren definiert ist, wobei der Zonenausfall-Risiko-Score jeder der Vielzahl von vorbestimmten Zonen auf Basis einer mittleren Zeit zwischen Ausfällen (MTBF) für jeden der Vielzahl von Sensoren, die der entsprechenden Zone zugeordnet sind, berechnet wird;
Bestimmen (1002) einer Sensorfähigkeitsabdeckung des ADV auf Basis des Zonenausfall-Risiko-Scores, der jeder der Vielzahl von vorbestimmten Zonen zugeordnet ist;
Bestimmen (1003) eines befahrbaren Bereichs des ADV auf Basis der Sensorfähigkeitsabdeckung mit Blick auf Kartendaten, die einem aktuellen Standort des ADV zugeordnet sind; und
Planen (1004) einer Bahn auf Basis des befahrbaren Bereichs, um das ADV autonom zu fahren, um durch eine Fahrumgebung, die das ADV umgibt, zu navigieren.

2. Verfahren nach Anspruch 1, weiter umfassend:

Erkennen eines Hindernisses auf Basis von Sensordaten, die von mindestens einem Teil der Sensoren erhalten werden; und
Anpassen des befahrbaren Bereichs auf Basis einer Position des Hindernisses relativ zum aktuellen Standort des ADV.

3. Verfahren nach Anspruch 2, wobei das Anpassen des befahrbaren Bereichs auf Basis einer Position des Hindernisses umfasst:

Erkennen, dass sich das Hindernis innerhalb des befahrbaren Bereichs befindet;
Bestimmen einer maximalen Verlangsamungsrate des ADV; und
Verfeinern des befahrbaren Bereichs auf Basis der maximalen Verlangsamungsrate mit Blick auf ein Hindernis, das innerhalb des befahrbaren Bereichs erkannt wurde, um ein Kollidieren mit dem Hindernis zu vermeiden.

4. Verfahren nach Anspruch 2, weiter umfassend:

Erkennen, dass sich das Hindernis innerhalb des befahrbaren Bereichs befindet;
Vorhersagen einer Bewegungsbahn des Hindernisses; und
Verfeinern des befahrbaren Bereichs des ADV auf Basis der vorhergesagten Bewegungsbahn des Hindernisses.

5. Verfahren nach Anspruch 4, wobei die Bewegungsbahn des Hindernisses in Reaktion auf das Erkennen, dass sich das Hindernis außerhalb des befahrbaren Bereichs befindet, vorhergesagt wird.

6. Verfahren nach Anspruch 4, wobei sich ein Teil des Hindernisses innerhalb des befahrbaren Bereichs befindet.

7. Verfahren nach einem der Ansprüche 1-6, weiter umfassend:

Bestimmen, dass ein erster Zonenausfall-Risiko-Score einer ersten Zone der Vielzahl von vorbestimmten Zonen eine erste vorbestimmte Risikoschwelle überschreitet; und
Modifizieren der Sensorfähigkeitsabdeckung des ADV in Reaktion auf das Bestimmen, dass der erste Zonenausfall-Risiko-Score die erste vorbestimmte Risikoschwelle überschreitet.

8. Verfahren nach einem der Ansprüche 1-7, weiter umfassend:

Bestimmen, dass ein erster Sensor nicht ordnungsgemäß funktioniert; und
Modifizieren der Sensorfähigkeitsabdeckung des ADV auf Basis einer Sensorabdeckung des ausgefallenen ersten Sensors.

9. Nichtflüchtiges maschinenlesbares Medium, das darin gespeicherte Anweisungen aufweist, die, wenn sie von einem Prozessor ausgeführt werden, den Prozessor dazu bringen, das Verfahren nach einem der Ansprüche 1-8 durchzuführen.

10. Datenverarbeitungssystem, umfassend:

einen Prozessor; und
einen Speicher, der mit dem Prozessor gekoppelt ist, um Anweisungen zu speichern, die, wenn sie von dem Prozessor ausgeführt werden, den Prozessor dazu bringen, das Verfahren nach einem der Ansprüche 1-8 durchzuführen.

11. Computerprogramm, das Anweisungen aufweist, die, wenn sie von einem Prozessor ausgeführt werden, den Prozessor dazu bringen, das Verfahren nach einem der Ansprüche 1-8 zu implementieren.

**Revendications**

1. Procédé mis en oeuvre par ordinateur pour faire fonctionner un véhicule autonome (ADV), le procédé comprenant les étapes consistant à :

calculer (1001) un score de risque de défaillance de zone pour chacune d'une pluralité de zones prédéterminées sur la base d'un score de risque de défaillance de capteur associé à chacun d'une pluralité de capteurs montés sur l'ADV, la pluralité de zones prédéterminées étant définie sur la base d'une disposition de capteur des capteurs, dans lequel le score de risque de défaillance de zone de chacune de la pluralité de zones prédéterminées est calculé sur la base d'un temps moyen entre pannes (MTBF) pour chacun de la pluralité de capteurs associés à la zone correspondante ;
déterminer (1002) une couverture de capacité de capteur de l'ADV sur la base du score de risque de défaillance de zone associé à chacune de la pluralité de zones prédéterminées ;
déterminer (1003) une région carrossable de l'ADV sur la base de la couverture de capacité de capteur en fonction de données cartographiques associées à un emplacement actuel de l'ADV ; et
planifier (1004) une trajectoire sur la base de la région carrossable pour conduire de manière autonome l'ADV afin de naviguer dans un environnement de conduite entourant l'ADV.

**2.** Procédé selon la revendication 1, comprenant en outre les étapes consistant à :

détecter un obstacle sur la base de données de capteur obtenues à partir d'au moins une partie des capteurs ; et

ajuster la région carrossable sur la base d'une position de l'obstacle par rapport à l'emplacement actuel de l'ADV.

**3.** Procédé selon la revendication 2, dans lequel l'étape consistant à ajuster la région carrossable sur la base d'une position de l'obstacle comprend les étapes consistant à :

détecter que l'obstacle est situé dans la région carrossable ;

déterminer une vitesse de décélération maximale de l'ADV ; et

affiner la région carrossable sur la base de la vitesse de décélération maximale en fonction d'un obstacle détecté dans la région carrossable afin d'éviter toute collision avec l'obstacle.

**4.** Procédé selon la revendication 2, comprenant en outre les étapes consistant à :

détecter que l'obstacle est situé dans la région carrossable ;

prédire une trajectoire de déplacement de l'obstacle ; et

affiner la région carrossable de l'ADV sur la base de la trajectoire de déplacement prédite de l'obstacle.

**5.** Procédé selon la revendication 4, dans lequel la trajectoire de déplacement de l'obstacle est prédite en réponse à la détection du fait que l'obstacle est situé à l'extérieur de la région carrossable.

**6.** Procédé selon la revendication 4, dans lequel une partie de l'obstacle est située à l'intérieur de la région carrossable.

**7.** Procédé selon l'une quelconque des revendications 1-6, comprenant en outre les étapes consistant à :

déterminer qu'un premier score de risque de défaillance de zone d'une première zone de la pluralité de zones prédéterminées dépasse un premier seuil de risque prédéterminé ; et

modifier la couverture de capacité de capteur de l'ADV en réponse à la détermination que le premier score de risque de défaillance de zone dépasse le premier seuil de risque prédéterminé.

**8.** Procédé selon l'une quelconque des revendications 1-7, comprenant en outre les étapes consistant à :

déterminer qu'un premier capteur ne fonctionne pas correctement ; et

modifier la couverture de capacité de capteur de l'ADV sur la base d'une couverture de capteur du premier capteur défaillant.

**9.** Support non transitoire lisible par machine dans lequel sont stockées des instructions qui, lorsqu'elles sont exécutées par un processeur, amènent le processeur à effectuer le procédé selon l'une quelconque des revendications 1-8.

**10.** Système de traitement de données, comprenant :

un processeur ; et

une mémoire couplée au processeur pour stocker des instructions qui, lorsqu'elles sont exécutées par le processeur, amènent le processeur à effectuer le procédé selon l'une quelconque des revendications 1-8.

**11.** Programme informatique présentant des instructions qui, lorsqu'elles sont exécutées par un processeur, amènent le processeur à mettre en oeuvre le procédé selon l'une quelconque des revendications 1-8.

100

Sensor System
115

Control System
111

Wireless Communication System
112

User Interface System
113

Perception and Planning System
110

Autonomous Vehicle
101

Network
102

Server(s)
(e.g., map & location)
104

Machine
Learning Engine
122

Data Collector
121

Driving Statistics
123

Algorithms/
Models
124

Server(s)
(e.g., data analytics system)
103

**FIG. 1**

| Camera(s) 211 | GPS Unit 212 | IMU 213 |
|---|---|---|
| Radar Unit 214 | LIDAR Unit 215 | Sensor System 115 |

| Steering Unit 201 | Throttle Unit 202 | Braking Unit 203 |
|---|---|---|

Control System
111

**FIG. 2**

300

Localization Module 301

Perception Module 302

Prediction Module 303

Decision Module 304

Planning Module 305

Control Module 306

Memory 351

Safety Redundancy Monitoring Module 308

Routing Module 307

Sensor System 115

Map and Route Information 311

Driving/Traffic Rules 312

Algorithms/ Models 124

Persistent Storage Device 352

Control System 111

Perception and Planning System 110

**FIG. 3A**

Map & Route Data 311

Routing Module 307

Perception Module 302

Decision Module 304

Planning Module 305

Control Module 306

Prediction Module 303

**FIG. 3B**

| Failure Risk Score Module 401 | Vehicle Motion Boundary Module 402 |
| Obstacle Coverage Module 403 | Safety Redundancy Monitoring Module 308 |

# FIG. 4

500

```
┌─────────────────────────────────┐
│  ADS Capability: Coverage Boundary │
│     and Risk Distribution          │
│            501                     │
└─────────────────────────────────┘
```

```
┌─────────────────────┐          ┌──────────────────────────────────┐
│  System HW/SW        │          │ System Performance Limitation Within │
│  Failure Within ADS  │          │     ODD (Sensor/Algorithm)         │
│       502            │          │            503                     │
└─────────────────────┘          └──────────────────────────────────┘
```

```
┌─────────────────────┐          ┌──────────────────────┐
│  ISO 26262           │          │  ISO PAS 21448        │
│  (Functional Safety) │          │  (SOTIF)              │
│       504            │          │      505              │
└─────────────────────┘          └──────────────────────┘
```

```
┌─────────────────────┐          ┌──────────────────────┐
│  Static Coverage     │          │  Dynamic Coverage     │
│      and             │          │  Modification and Risk│
│  Risk Definition     │          │  Adjustment           │
│       506            │          │      507              │
└─────────────────────┘          └──────────────────────┘
```

```
┌──────────────────────┐  ┌──────────────────────┐  ┌──────────────────┐  ┌──────────────┐
│ Sensor Coverage and  │  │ MTBF based Sensor     │  │ Coverage Boundary │  │ Zone Risk     │
│ Zone Definition (Sensor│ │ Performance Limitation│  │ Adjustment        │  │ Adjustment    │
│ Specification and Lay-out)│ Induced Risk         │  │     510           │  │    511        │
│       508            │  │      509              │  │                   │  │               │
└──────────────────────┘  └──────────────────────┘  └──────────────────┘  └──────────────┘
```

FIG. 5

```
┌──────────────────┐      ┌──────────────────┐      ┌──────────────────┐
│ Primary Sensors  │      │ Shared Sensors   │      │   Redundant      │
│      601         │      │      602         │      │   Sensors        │
│                  │      │                  │      │      603         │
└──────────────────┘      └──────────────────┘      └──────────────────┘
```

Primary Sensors 601

Shared Sensors 602

Redundant Sensors 603

ADS Internal Communication 606

Primary ADS 604

Back-up ADS 605

Vehicle Motion Actuator Commands 608

Vehicle Motion Actuator Fallback Commands 609

Vehicle Motion Actuation System 607

**FIG. 6**

Side-view facing fisheye camera

Front-view facing fisheye camera

Side-inclined Lidar

Side rear-view facing radar

Front-view facing Lidar

Rear-view facing fisheye camera

Front-view facing radar

Front-view facing camera

Rear—view facing camera

Side front-view facing camera

360 degree Lidar

Side rear-view facing camera

700

☐ Fisheye camera for primary ADS
☐ Camera for primary ADS
▨ Shared radar
● 360 degree Lidar for primary ADS
■ Front-view facing Lidar for back-up ADS

FIG. 7

FIG. 8A

810

C E

A
B

G

I

K
L

Y

F

H

J

812

ADV

X

M

N

T

P

W V

R

O

Q

U S

**FIG. 8B**

FIG. 8C

360 degree
Lidar

Side view
shared Lidar

Rear view
side camera

Forward view
side camera
(Experience performance limitation)

Risk:
10^-l

Forward view
side camera

Risk:
10^-l

Coverage range reduced

Risk:
10^-l

Risk:
10^-(c+l)

Risk:
10^-(c+l)

Risk:
10^-(c+l)

Risk:
10^-c

Forward facing
cameras

Rear facing
Shared radar

Risk:
10^-r

Risk:
10^-(r+l)

Risk:
10^-(c+l)

Risk:
10^-(c+l)

Risk:
10^-2l

Risk:
10^-(c+l)

Risk:
10^-c

Risk:
10^-2r

Risk:
10^-(2r+l)

Risk:
10^-(c+l+r)

Risk:
10^-(c+2l+r)

Risk:
10^-(c+r+l)

Risk:
10^-(c+r)

Risk:
10^-c

Autonomous
Car

Risk:
10^-r

Risk:
10^-(r+l)

Risk:
10^-(c+l)

Risk:
10^-(c+l)

Risk:
10^-(c+l)

Rear facing
camera

Rear view
side camera

Risk:
10^-(c+l)

Risk:
10^-(c+l)

Risk:
10^-(c+l)

Risk:
10^-2l

Forward facing
redundant Lidar

Forward view
side camera

Forward facing
Shared radar

Side view
shared Lidar

Camera:
MTBF: 10^c (Hour), Risk: 10^-c (1/Hour)

Lidar:
MTBF: 10^l (Hour), Risk: 10^-l (1/Hour)

Radar:
MTBF: 10^r (Hour), Risk: 10^-r (1/Hour)

Statistic Data

900

Radar
Data
901

Radar/Algorithm
904

Radar
MTBF
907

LIDAR
Data
902

LIDAR/Algorithm
905

LIDAR
MTBF
908

Camera
Data
903

Camera/Algorithm
906

Camera
MTBF
909

Sensor Specification/Layout
910

1. Sensor System Coverage
2. Sensor Zone Definition
3. Risk Distribution
4. MTBF/Risk Adjustment

Sensor System
Coverage and
Risk Distribution

Sensor System
Monitor
912

1. Obstacle within
coverage
• Obstacle in
Low Risk Zone
• Obstacle in
High Risk Zone
2. Obstacle outside
coverage
3. HD Map
4. Chassis
Parameters

Refined
Drivable Areas
for Monitor

Sensor Fusion
911

1. Fusion Algorithm
2. Object Tracking

Obstacle List
with Attributes

Chassis Parameters
(Vehicle speed,
Deceleration
capability, etc.)

FIG. 9

1000

```
┌─────────────────────────────────────────────────────┐
│ Calculate a zone failure risk score for each of a   │
│ plurality of predetermined zones based on a sensor   │
│ failure risk score associated with each of a         │── 1001
│ plurality of sensors mounted on the ADV, the         │
│ predetermined zones being defined based on a sensor  │
│ layout of the sensors.                               │
└─────────────────────────────────────────────────────┘
                          │
                          ▼
┌─────────────────────────────────────────────────────┐
│ Determine a sensor capability coverage of the ADV    │── 1002
│ based on the zone failure risk score associated with │
│ each of the zones.                                   │
└─────────────────────────────────────────────────────┘
                          │
                          ▼
┌─────────────────────────────────────────────────────┐
│ Determine a drivable area of the ADV based on the    │
│ sensor capability coverage in view of map data       │── 1003
│ associated with a current location of the ADV.       │
└─────────────────────────────────────────────────────┘
                          │
                          ▼
┌─────────────────────────────────────────────────────┐
│ Plan a trajectory based on the drivable area to      │── 1004
│ autonomously drive the ADV to navigate a driving     │
│ environment surrounding the ADV.                     │
└─────────────────────────────────────────────────────┘
```

**FIG. 10**

1100

1. Load ADS sensor configuration file
2. Load risk threshold
1101

↓

Load sensor's MTBF
1102

↓

Associate sensor's MTBF with respective zone
1103

↓

Compute MTBF based zone risk (Figure 8a)
1104

↓

1. Read vehicle deceleration capability from chassis system
2. Read perception output
1105

MTBF updates?

No →

Yes ↓

Update MTBF based zone risk (Figure 8c)
1106

↓

Define sensor system capability boundary based on risk threshold (Figure 8a and 8c)
1107

↓

Define initial vehicle motion boundary from HD map, capability boundary and vehicle deceleration capability
1108

↓

Obstacles from perception within boundary?  — No →  Potentially intercept motion boundary?  — No →

Yes ↓                                          Yes ↓

Refine vehicle motion boundary from obstacles detected by perception
1109

Refine vehicle motion boundary based on predicted trajectory
1111

↓

Use vehicle motion boundary for monitor (Figure 9)
1110

↓

No ←  Route complete?  → Yes  →  End

FIG. 11

**EP 3 882 100 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019050692 A1
- US 2019049958 A1